# EUROPÄISCHE PATENTSCHRIFT

(11) **EP 1 267 193 B1**
(45) Veröffentlichungstag und Bekanntmachung des Hinweises auf die Patenterteilung: **19.01.2005**
(21) Anmeldenummer: 02013140.5
(22) Anmeldetag: 14.06.2002
(51) Int. Cl.: G02B 7/182, G02B 26/08

(54) **Präzisionsgehalterter Kippspiegel für optische Geräte**
Precision supported tilting mirror for optical devices
Support de haute précision pour miroirs pivotants pour des dispositifs optiques

(30) Priorität: 15.06.2001 DE 10128965
(43) Veröffentlichungstag der Anmeldung: 18.12.2002
(73) Patentinhaber: Leica Microsystems (Schweiz) AG, 9435 Heerbrugg (CH)
(72) Erfinder: Gräfenhain, Paul, 9435 Heerbrugg (CH)
(74) Vertreter: Reichert, Werner F., Dr.

(56) Entgegenhaltungen:
- DE-A- 2 341 038
- US-A- 4 930 883
- US-A- 5 121 220
- US-A- 5 394 270
- US-A- 5 793 528

## Beschreibung

Die Erfindung betrifft eine Kippspiegel-Anordnung zum wahlweisen Ein- und Ausschalten in einen optischen Strahlengang eines optischen Gerätes. Es sind viele Anordnungen bekannt, bei denen ein Spiegel gekippt wird, um ein Strahlenbündel auf verschiedenen Wegen durch ein multifunktionales optisches Gerät zu lenken. Beispielsweise kann mit einem Kippspiegel in einem Mikroskop die vom Objekt ausgehende Strahlung wahlweise dem Auge des Beobachters oder einem Dokumentationsmedium zugeführt werden. Schaltet ein Spiegel nur zwischen zwei Lichtwegen, so werden beispielsweise Anordnungen gewählt, bei denen der Spiegel in der einen Stellung im Strahlengang angeordnet ist, um das Licht abzulenken (= Wirkstellung) und in der zweiten Stellung außerhalb des Lichtweges platziert wird. Solche Anordnungen erfordern eine hohe Winkelgenauigkeit und Reproduzierbarkeit der Spiegellage in Wirkstellung.

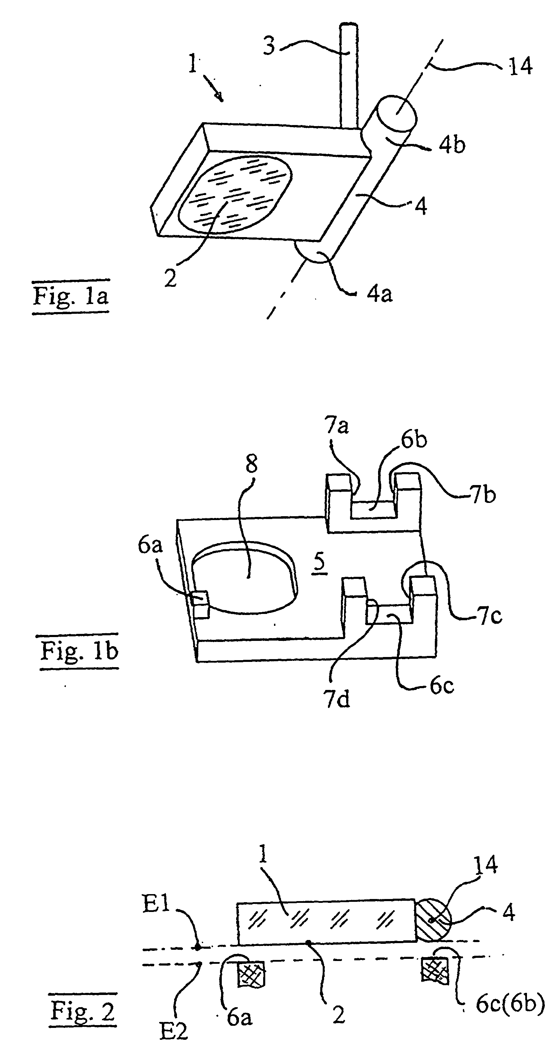

Aus der DE-PS 2 029 850 ist beispielweise ein Fotometer für Mikroskope bekannt, bei dem - vergleiche die dortige Figur 1 - ein Hubmagnet das ein Ein- bzw. Ausschwenken in bzw. aus dem Strahlengang bewirkt.

Auch aus der DE-OS 2 341 038 ist in der dortigen Figur 1 ein Kippspiegel in 45°-Stellung gezeigt, der in dieser Position den vertikalen Abbildungsstrahlengang in einem Makro-Mikroskop sperrt und einen rechtwinklig dazu angeordneten Einspiegelungsstrahlengang in das Okularsystem einspiegelt.

Aus der DE-OS 2 717 033 ist des weiteren eine mikrofotografische Lichtmesseinrichtung bekannt, bei der - vergleiche die dortige Figur 2 - ein Umlenkspiegel in der Weise in einen optischen Strahlengang eingebracht werden kann, dass dieser Umlenkspiegel mittels eines manuell betätigbaren Trägers in Wirkstellung geschoben wird.

Es sind weiterhin Lösungen bekannt, vgl. beispielsweise die US-PS 5 394 270, bei denen an einer mechanischen Kippachse ein schwenkbarer Halter befestigt ist, der den Spiegel an seiner Rückseite oder Seitenfläche aufnimmt. Die genaue Winkelablenkung wird dabei durch die Anordnung der Kippachse und durch die Anlage des Spiegels bzw. des Halters an einem Anschlag festgelegt. Der Anschlag und/oder die Kippachse sind justierbar gestaltet, um auch für unterschiedliche Spiegeldicken und Fertigungstoleranzen des Halters eine möglichst genaue Winkelablenkung einstellen zu können. Damit also der Kippspiegel nach jeder Verkippung wieder seine ursprüngliche Winkellage einnehmen kann, sind hohe Anforderungen an das Lager der Kippachse gestellt; außerdem muss die Spiegelposition in Wirkstellung justiert werden.

Demgegenüber ist es die Aufgabe der vorliegenden Erfindung, die erwähnten Nachteile der bekannten konstruktiven Lösungen zu beseitigen und eine präzisionsgehalterte, justierfreie Kippspiegel-Anordnung vorzustellen, die darüber hinaus preiswert hergestellt sowie in allen optischen Geräten eingesetzt werden kann.

Diese Aufgabe wird durch einen Kippspiegel mit einer Halterung zum wahlweisen Umlenken bzw. Durchlassen eines Strahlenbündels in einem eine Kippspiegel-Halterung bekannt, bei der beide Enden der Kippachse jeweils in einer "V"-förmigen Rille gehaltert werden, wobei zusätzlich jeweils eine plane Abdeckplatte die Enden der Kippachse tangieren. Hierdurch wird an jedem Ende der Kippachse eine 3-Punkt-Kontaktierung realisiert. Diese fertigungstechnisch komplizierte Kippspiegel-Halterung weist mithin allein im Bereich der Kippspiegel-Achse eine 6-Punkt-Auflage auf. Zusätzlich ist als siebente Punkt-Auflage eine verstellbare Schraube vorgesehen. Es sind in nachteiliger Weise eine Vielzahl von Präzisionsflächen zu fertigen. die außerdem in mindestens vier unterschiedlichen Ebenen liegen.
optischen Gerät dadurch gelöst, dass - wie im Hauptanspruch beschrieben - der Kippspiegel auf einem Träger angeordnet ist, der eine 3-Flächen-Auflage für die Präzisionshalterung des Kippspiegels in Wirkstellung aufweist. Weitere Ausgestaltungen der vorliegenden Erfindung ergeben sich aus den Unteransprüchen.

Dabei ist es zweckmäßig, dass der Kippspiegel auf seiner Spiegelseite in seinem Endbereich mindestens eine Ausnehmung, beispielsweise eine Rille aufweist. Nach einer weiteren Ausführungsform weist der Träger zur Halterung des Kippspiegels Trägerteile zur Verkippung des Kippspiegels auf derart, dass zwei Trägerteile am Träger befestigt sind, auf deren jeweiligen Endbereichen ein durchgehender zylinderförmiger Anschlag- und Abrollkörper fest angeordnet ist. Auch ist es möglich, dass die Trägerteile winkelförmig ausgebildet sind und armartig am Träger angelenkt sind. Dabei kann es zweckmäßig sein, dass auf jedem Trägerteil an Stelle eines durchgehenden Körpers je ein zylinderförmiger Anschlag- und Abrollkörper fest angeordnet ist und dass die Präzisionsflächen in ihren jeweils zur Kippachse bzw. zum Körper hin weisenden Bereichen abgerundet sind.

Darüber hinaus ist es möglich, dass der Träger eine Öffnung für den Durchgang von Strahlenbündeln mit den optischen Achsen aufweist, wobei die Größe der Öffnung mit der Flächengröße des Reflexionsbereichs des Kippspiegels korrespondiert. Weiterhin kann die Betätigung der Kippfunktion des Kippspiegels mit motorischen Mitteln erfolgen, die im Innenbereich des zylinderförmigen Teils angeordnet sind. Schließlich ist es auch möglich, dass im Bereich seines zylinderförmigen Teils ein Hebel zum Betätigen der Kippfunktion des Kippspiegels angelenkt ist.

Die Vorteile dieses erfindungsgemäßen Kippspiegels bestehen darin, dass für die hohe Positionierungsgenauigkeit und Reproduzierbarkeit lediglich eine durch drei präzisionsbearbeitete Flächenstücke gebildete Ebene erforderlich ist und eine Justierung der Funktionslage entfällt. Eine speziell gestaltete mechanische Kippachse und eine präzise Lagerung einer solchen Achse ist nicht notwendig. An die Mechanik - also an die Anschlag-Geometrien zum Begrenzen eventueller seitlicher Bewegungen des Spiegels - werden konstruktionsseitig keine hohen Anforderungen gestellt. Die Erfindung wird nun an Hand der Figuren beschrieben. Es zeigen in rein schematischer Darstellung:
- Figur 1a:: eine erste Ausführungsform eines erfindungsgemäßen Kippspiegels;
- Figur 1b:: den zu dem in Figur 1a gezeigten Kippspiegel gehörenden Träger;
- Figur 2:: eine Seitenansicht - in "gesprengter" Darstellung - des Kippspiegels in Wirkstellung;
- Figur 3a:: den Kippspiegel mit zugeordnetem Träger (außer Wirkstellung);
- Figur 3b:: den an bzw. auf dem Träger präzise anliegenden Kippspiegel (in Wirkstellung);
- Figur 4a:: eine leicht abgewandelte Ausführungsform eines Kippspiegels;
- Figur 4b:: eine Seitenansicht - in "gesprengter" Darstellung - dieser abgewandelten Ausführungsform mit einem lediglich angedeuteten Trägerteil;
- Figur 5a:: eine Draufsicht auf eine weitere Ausführungsform eines Kippspiegels mit darunter befindlichem Träger, wobei in dieser Darstellung lediglich einige Trägerteile erkennbar sind;
- Figur 5b:: die Seitenansicht des in Fig. 5a dargestellten Kippspiegels mit präzise anliegendem Trägerteil in 3-Flächen-Auflage, wobei in dieser rein schematischen Darstellung lediglich zwei Flächen erkennbar sind.

In Figur 1a ist ein Kippspiegel 1 gezeigt, der an seiner Unterseite einen spiegelnden Reflexionsbereich 2 aufweist. An seinem Endbereich befindet sich ein zylinderförmiger Teil 4, dessen Achse mit der Kippachse 14 des Kippspiegels 1 zusammenfällt. Man erkennt, dass der zylinderförmige Teil 4 zu beiden Seiten des Kippspiegels 1 gewissermaßen "verlängert" ist, wodurch Vorsprünge 4a und 4b gebildet werden. Mit einem beispielsweise manuell betätigbaren Hebel 3 kann dieser Kippspiegel um seine Achse 14 verschwenkt bzw. verkippt werden.

Diese Kippspiegel-Anordnung korrespondiert mit dem in Figur 1b dargestellten Träger 5, der als Platte ausgebildet ist, die eine Öffnung 8 für den einfallenden bzw. reflektierten bzw. durchgelassenen Strahlengang aufweist. Man erkennt weiterhin Präzisions-Flächenstücke 6a - 6c, wobei die Flächenstücke 6b und 6c Präzisions-Auflageflächen für die Vorsprünge 4a bzw. 4b des zylinderförmigen Teils 4 darstellen. Am anderen Randbereich des Trägers 5 befindet sich eine Präzisions-Anschlagfläche 6a, wobei die Konstruktion derart ausgeführt ist, dass die Flächen 6a und 6b und 6c gemeinsam eine "3-Flächen-Auflage" 6a - 6c für den Kippspiegel 1 realisieren. Damit der Kippspiegel gegen einen ungewollten Lateralversatz geschützt ist, befinden sich Anlageflächen 7a - 7d in gewinkelter Anordnung zu den Präzisions-Auflageflächen 6b und 6c.

In Figur 2 ist in auseinander gezogener Darstellung die Wirkstellung des Kippspiegels 1 dargestellt. Man erkennt, dass die den Reflexionsbereich 2 aufweisende Unterseite des Kippspiegels 1 auf einer fiktiven Ebene E1 liegt, wobei der zylinderförmige Teil 4 bzw. dessen Vorsprünge 4a und 4b ebenfalls auf der Ebene E1 liegt. Mathematisch formuliert bedeutet dies, dass die Spur der fiktiven Ebene E1 den kreisförmigen Querschnitt des zylinderförmigen Teils 4 tangential berührt. Diese Konstellation ist mit einem einzigen Fertigungsvorgang in präzisier Weise realisierbar. Eine Möglichkeit besteht darin, dass der zylinderförmige Teil 4 und der Kippspiegel 1 - auf einer gemeinsamen Unterlage liegend - fest miteinander verbunden werden. Dies kann beispielsweise mittels Klebens, Kittens bzw. Schweißens geschehen.

Andererseits wäre es auch möglich, den Kippspiegel 1 zusammen mit dem zylinderförmigen Teil 4 einstückig auszubilden, wobei beispielsweise durch spanabhebende Präzisionsbearbeitung die Unterseite des Kippspiegels soweit planparallel abgetragen wird, dass beide Teile (1 und 4) auf der fiktiven Ebene E1 zu liegen kommen. In Figur 2 ist lediglich die säulenförmige Präzisions-Anschlagfläche 6a und das Präzisions-Flächenstück 6c zu erkennen, welches das zugehörige Flächenstück 6b verdeckt. Man erkennt, dass die Oberfläche der Präzisions-Flächenstücke 6a - 6c ebenfalls in einer fiktiven Ebene E2 liegen. Wie bereits erwähnt, fallen diese beiden fiktiven Ebenen E1 und E2 in der Wirkstellung des Kippspiegels zusammen, so dass gilt: E1 ≡ E2.

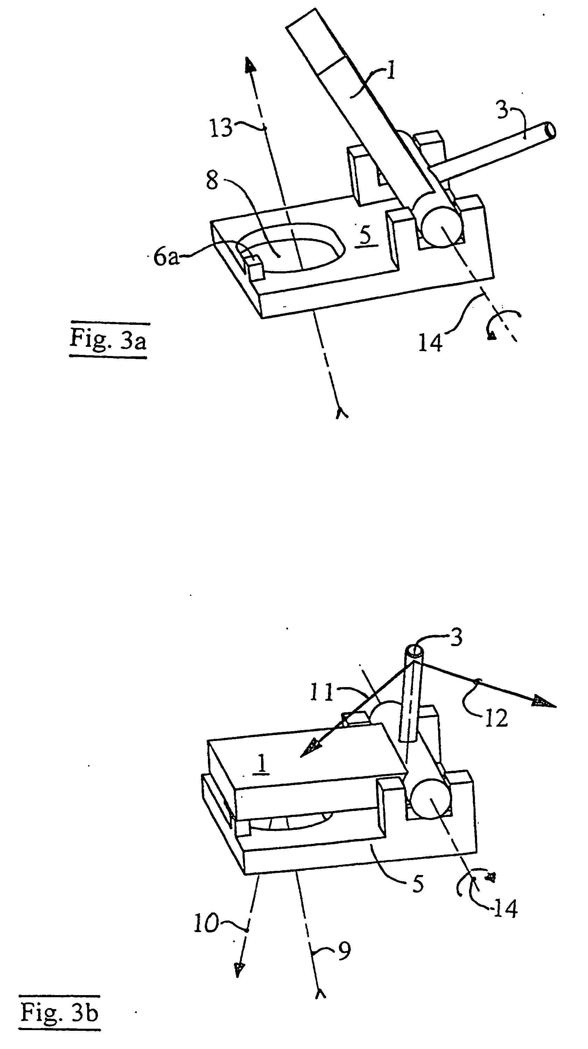

In Figur 3a wird der Kippspiegel 1 in Verbindung mit seinem Träger 5 in Außer-Wirkstellung gezeigt, so dass der Strahlengang 13 durch die Öffnung 8 frei durchtreten kann.

In Figur 3b befindet sich der Kippspiegel 1 in Wirkstellung, so dass der Einfalls-Strahlengang 9 an dem Reflexionsbereich 2 reflektiert wird und als Reflexionsstrahlengang 10 umgelenkt wird. Rein schematisch ist dargestellt, dass an dem Hebel 3 ein Kraftvektor 11 wirkt, der die präzise Verkippung des Kippspiegels 1 bewirkt. Die Kraft drückt gewissermaßen gegen die drei Flächenstücke 6a - 6c. Zum Ausschalten des Kippspiegels 1 wirkt an Stelle dieser Kraft 11 eine Gegenkraft 12, vergleiche den entsprechenden Kraftvektor 12, dessen Wirkungsrichtung deutlich außerhalb des unterstützenden Dreiecks - gebildet durch die Flächen 6a bis 6c - liegt. Es sei hervorgehoben, dass zum Einschalten und Aufrechterhalten der Wirkstellung des Kippspiegels 1 eine Kraft an dem Hebel 3 ausübt wird, wobei der Vektor 11 die Auflage-Ebene des Kippspiegels 1 innerhalb der drei Unterstützungspunkte bzw. Unterstützungsflächen 6a - 6c schneidet. Soll also der Kippspiegel 1 aus seiner Wirkstellung bewegt werden - wie in Figur 3a dargestellt -, so wird die Wirkungsrichtung der Kraft in der Weise geändert, dass ihr Vektor 12 die unterstützende Ebene deutlich außerhalb des durch die drei genannten Punkte bzw. Flächen 6a - 6c gebildeten Dreiecks schneidet. Dadurch wird der Kippspiegel 1 von der unterstützenden 3-Flächen-Ebene weg bewegt, wobei der Weg relativ zu zwei der drei zu unterstützenden Bereiche vorteilhafterweise begrenzt wird, so dass der Kippspiegel eine Art Roll- bzw. Kippbewegung ausführt. Ein dabei unter Umständen auftretendes laterales Verschieben ist für die Funktion unschädlich und wird durch geeignete Mittel - wie zum Beispiel seitliche Vorsprünge bzw. Ausnehmungen am Kippspiegel und diesen gegenüberliegenden Anschlagflächen am Trägerteil - wirksam begrenzt.

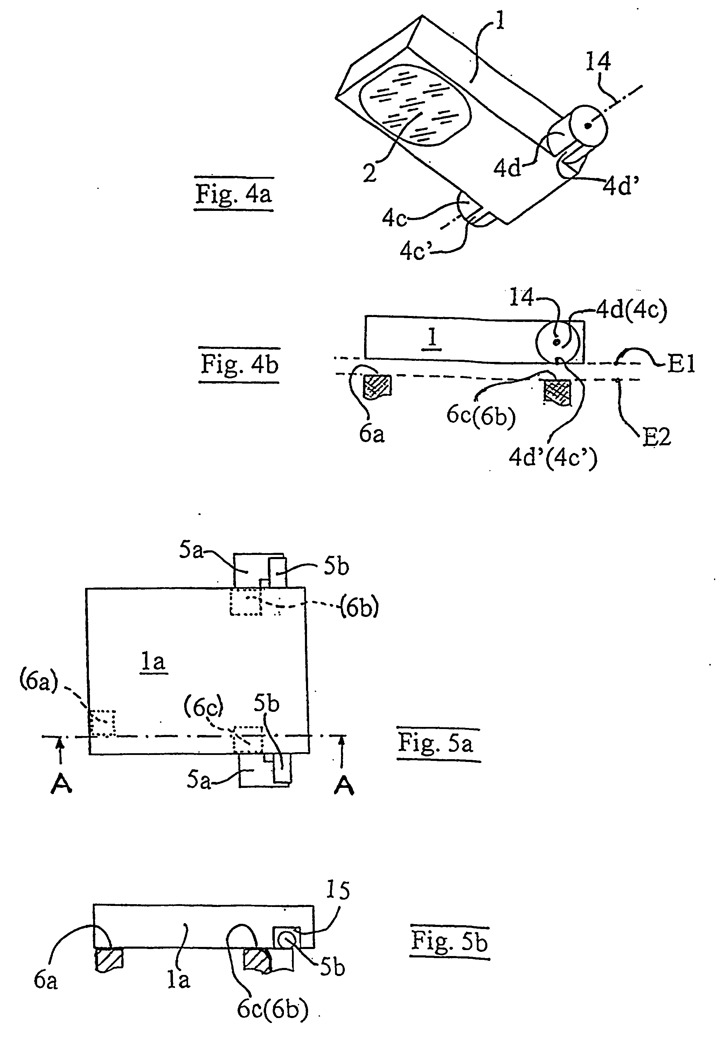

In Figur 4a ist eine kleine Variation des Kippspiegels 1 bzw. - genauer gesagt - lediglich der Vorsprünge des zylinderförmigen Teiles 4 - dargestellt. Man erkennt, dass die zylinderförmigen Ansätze 4c und 4d Abflachungsbereiche 4c' und 4d' aufweisen. Diese Abflachungsbereiche liegen co-planar zusammen mit der Unterseite des Kippspiegels 4 in der Ebene E1. Dies wird in Figur 4b illustriert. Diese konstruktive Kippspiegel-Variante hat den fertigungstechnischen Vorteil, dass die Ebene E1 durch einen einzigen spanabhebenden Präzisionsfertigungsvorgang realisiert werden kann. Es sei noch hervorgehoben, dass die Abflachungsbereiche 4c' und 4d' lediglich schmale "Stege" darstellen, um den Translations- bzw. Kipp- bzw. Abrollvorgang nicht bewegungs-untypisch zu beeinträchtigen.

In den Figuren 5a und 5b ist eine weitere Ausführungsform eines Kippspiegels 1a sowie des korrespondierenden Trägers dargestellt. In Figur 5a erkennt man in Draufsicht den Kippspiegel 1a, während der darunter liegende eigentliche Hauptteil des Trägers nicht zu erkennen ist. Dafür sind beidseits Trägerteile 5a an dem eigentlichen Träger angelenkt. Man erkennt, dass es sich um abgewinkelte armförmige Trägerteile 5a handelt, die an bzw. auf ihren jeweiligen Endbereichen einen zylinderförmigen Anschlag- und Abrollkörper 5b tragen. Dabei kann es sich um einen durchgehenden Zylinderkörper handeln. Es ist indes auch möglich, dass an Stelle eines einstückigen zylinderförmigen Körpers 5b zwei zylinderförmige Teilkörper vorgesehen sind.

Die Figur 5b stellt eine Seitenansicht längs des Schnittes A - A von Figur 5b dar. Man erkennt, dass der Kippspiegel 1a in seinem Endbereich eine Ausnehmung 15 aufweist, die beispielsweise als eine durchgehende Rille konzipiert sein kann. Diese Rille nimmt den oder die Anschlag- und Abrollkörper 5b auf. Figur 5b zeigt, dass der Kippspiegel 1a in Wirkstellung derart positioniert ist, dass das Oberteil der Ausnehmung 15 den/die Körper 5b nicht kontaktiert. Damit ist also sichergestellt, dass der Kippspiegel 1a lediglich auf einer 3-Flächen-Auflage 6a - 6c präzise an- bzw. aufliegt. Die Funktion des zylindrischen Körpers 5b besteht also lediglich darin, beim Außer-Wirkstellung-Bringen des Kippspiegels 1a als Anschlag- und Abrollkörper zu dienen. Die Querschnittsform der Ausnehmung 15 kann eine Vielzahl von Varianten aufweisen, wie in den Unteransprüchen beschrieben. Die Präzisions-Auflageflächen 6b und 6c sind bei dieser Ausführungsvariante des Kippspiegefs 1a derart ausgebildet, dass sie in ihrem zum Anschlag- und Abrollkörper 5b weisenden Teil abgerundet sind. Damit wird der kombinierte Translations-, Kipp- und Abrollvorgang des Kippspiegels 1a verbessert.

Es ist selbstverständlich möglich, noch diverse weitere mechanische Varianten für die Verkippung des Kippspiegels 1a vorzusehen. Beispielsweise wäre es denkbar, dass der Kippspiegel anstelle einer durchgehenden Ausnehmung lediglich zwei Sacklöcher in seinem hinteren Bereich aufweist, in die entsprechende Stifte - also zylinderförmige Teile - des Trägers 5 eingreifen.

Auch ist es möglich, dass der eigentliche Träger 5 sowie die Trägerteile 5a und 5b einstückig ausgebildet sind.

Als Materialien für den Kippspiegel mit integriertem zylinderförmigen Teil 4, 4c, 4d, 4c' und 4d' sowie für den Kippspiegel 1a einerseits, sowie für den Träger 5 einschließlich der Trägerteile 5a und 5b andererseits kommt beispielsweise Glas, Glaskeramik oder Keramikmaterial in Frage.

Die Vorteile der vorliegenden Erfindung bestehen darin, dass für die hohe Positionierungsgenauigkeit und Reproduzierbarkeit lediglich eine durch drei präzisionsbearbeitete Flächenstücke gebildete Ebene (E1 ≡ E2) erforderlich ist und eine nachträgliche Justierung der Funktionslage entfällt. Eine speziell gestaltete mechanische Kippachse und eine präzise Lagerung einer solchen Achse sind nicht notwendig. An die Mechanik - also an die Anschlag-Geometrien - zum Begrenzen eventueller seitlicher Bewegungen des Kippspiegels werden keine besonderen konstruktiven Anforderungen gestellt.

### Bezugszeichenliste

- 1, 1a -: Kippspiegel
- 2 -: Reflexionsbereich von (1) bzw. (1a)
- 3 -: Hebel
- 4 -: zylinderförmiger Teil von (1)
- 4a, 4b -: Vorsprünge von (4)
- 4c, 4d -: zylinderförmige Ansätze an (1)
- 4c', 4d' -: Abflachungsbereich(e) von (4c) bzw. (4d)
- 5 -: Träger für (1)
- 5a, 5b -: Trägerteil(e) für (1a)
- 5a -: abgewinkelte(r), armförmige(r) Trägerteil(e) für (5b)
- 5b -: zylinderförmiger Anschlag- und Abrollkörper für (1a)
- 6a - 6c -: Präzisions-Flächenstück(e)
- 6a -: Präzisions-Anschlagfläche
- 6b, 6c -: Präzisions-Auflagefläche(n)
- 7a - 7d -: Anlagefläche(n)
- 8 -: Öffnung für Strahlengang (9) bzw. (13)
- 9 -: Einfalls-Strahlengang
- 10 -: Reflexions-Strahlengang
- 11 -: Kraftvektor (in - Wirkstellung - bringen)
- 12 -: Kraftvektor (außer - Wirkstellung - bringen)
- 13 -: durchtretender Strahlengang
- 14 -: Kippachse
- 15 -: Ausnehmung in (1a) zur präzisen Ausführung der Kippbewegung von (1a)

- E1 -: gemeinsame Ebene von (2) und (4) bzw. (4c', 4d')
- E2 -: gemeinsame Ebene von (6a), (6b) und (6c)

## Patentansprüche

1. Kippspiegel-Anordnung zum wahlweisen Umlenken bzw. Durchlassen eines Strahlenbündels in einem optischen Gerät, vorzugsweise einem Mikroskop, bestehend aus einem Kippspiegel (1, 1a) und einem Träger (5), **dadurch gekennzeichnet, dass** der Kippspiegel (1, 1a) auf dem Träger (5) angeordnet ist, der eine durch Präzisions-Flächenstücke gebildete 3-Flächen-Auflage (6a-6c) für die Präzisionshalterung des Kippspiegels (1, 1a) in Wirkstellung aufweist, und auf einer Seite einen als Spiegelfläche ausgebildeten Reflexionsbereich (2) aufweist und sein Endbereich als zylinderförmiger Teil (4) mit einer Kippachse (14) ausgebildet ist und dass einerseits die den Reflexionsbereich (2) aufweisende Seite des Kippspiegels (1, 1a) und der zylinderförmige Teil (4) auf einer gemeinsamen Ebene (E1) liegen und andererseits die Präzisions-Flächenstücke (6a - 6c) des Trägers (5) ebenfalls auf einer gemeinsamen Ebene (E2) liegen, wobei beide Ebenen (E1, E2) in Wirkstellung des Kippspiegels (1) zusammenfallen (E1 ≡ E2).

2. Kippspiegel-Anordnung nach Anspruch 1, **dadurch gekennzeichnet, dass** der zylinderförmige Teil (4) beiderseits Vorsprünge (4a, 4b) entlang der Kippachse (14) und der Träger (5) zur Halterung des Kippspiegels (1, 1a) Präzisionsflächen (6b, 6c) zur Aufnahme des zylinderförmigen Teils (4, 4a, 4b) sowie eine Präzisionsfläche (6a) zum Anschlag des Kippspiegels (1, 1a) in Wirkstellung aufweist.

3. Kippspiegel-Anordnung nach mindestens einem der vorhergehenden Ansprüche, **dadurch gekennzeichnet, dass** der Träger (5) zusätzliche Anlageflächen (7a, 7b; 7c, 7d) für die Vorsprünge (4a, 4b) aufweist und dass diese im wesentlichen senkrecht auf den Präzisions-Auflageflächen (6b, 6c) stehen.

4. Kippspiegel-Anordnung nach mindestens einem der vorhergehenden Ansprüche, **dadurch gekennzeichnet, dass** der Kippspiegel (1) mit seinem zylinderförmigen Teil (4; 4a, 4b, 4c, 4d) und der Träger (5) zusammen mit seinen die Flächen (6a - 6c, 7a - 7d) aufweisenden säulen- bzw. "U"-förmigen Verkörperungen einstückig ausgebildet ist.

5. Kippspiegel-Anordnung nach mindestens einem der vorhergehenden Ansprüche, **dadurch gekennzeichnet, dass** der zylinderförmige Teil (4) und der Kippspiegel (1) einerseits, sowie die die Flächen (6a-6c, 7a-7d) aufweisenden Verkörperungen andererseits mit dem Träger (5) mittels Klebens, Kittens oder Schweißens präzisionsorientiert verbunden sind.

6. Kippspiegel-Anordnung nach mindestens einem der vorhergehenden Ansprüche, **dadurch gekennzeichnet, dass** der Kippspiegel (1) mit seinem zylinderförmigen Teil (4) einerseits, sowie der Träger (5) mit seinem die Flächen (6a - 6c, 7a - 7d) aufweisenden Verkörperungen andererseits aus ein und demselben Material gefertigt sind, wobei das Material ein Glas-, ein Keramik- bzw. ein Glaskeramik-Material ist.

7. Kippspiegel-Anordnung nach mindestens einem der vorhergehenden Ansprüche, **dadurch gekennzeichnet, dass** an Stelle der planen Präzisions-Anschlagfläche (6a) eine einen Anschlag-Punkt realisierende nicht-plane Fläche vorgesehen ist.

## Claims

1. Tilting mirror arrangement for optionally deflecting or transmitting a beam in an optical device, preferably a microscope, comprising a tilting mirror (1, 1a) and a base (5), **characterized in that** the tilting mirror (1, 1a) is arranged on the base (5) which has a 3-face support (6a-6c), formed by precision part faces, for the precision mount of the tilting mirror (1, 1a) in its operating position and has on one side a reflective area (2) constructed as a mirror surface, and the end region of the tilting mirror is constructed as a cylindrical part (4) with a tilting axis (14), and **in that**, on the hand, the side of the tilting mirror (1, 1a) having the reflective area (2) lies in a common plane (E1) with the cylindrical part (4), and on the other hand, the precision part faces (6a-6c) of the base (5) likewise lie in a common plane (E2), the two planes (E1, E2) coinciding (E1 ≡ E2) in the operating position of the tilting mirror (1).

2. Tilting mirror arrangement according to Claim 1, **characterized in that** the cylindrical part (4) has projections (4a, 4b) along the tilting axis (14) at both ends, and in order to mount the tilting mirror (1, 1a) the base (5) has precision faces (6b, 6c) for holding the cylindrical part (4, 4a, 4b) as well as a precision face (6a) for stopping the tilting mirror (1, 1a) in the operating position.

3. Tilting mirror arrangement according to at least one of the preceding claims, **characterized in that** the base (5) has additional locating surfaces (7a, 7b; 7c, 7d) for the projections (4a, 4b), and **in that** these surfaces are substantially at right angles to the precision supporting faces (6b, 6c).

4. Tilting mirror arrangement according to at least one of the preceding claims, **characterized in that** the tilting mirror (1) with its cylindrical part (4; 4a, 4b, 4c, 4d) is constructed in one piece with the base (5) together with the latter's columnar and U-shaped integral members having the faces (6a-6c, 7a-7d).

5. Tilting mirror arrangement according to at least one of the preceding claims, **characterized in that** the cylindrical part (4) and the tilting mirror (1), on the one hand, and the integral members having the faces (6a-6c, 7a-7d), on the other hand, are connected in a precisely oriented fashion to the base (5) by means of bonding, cementing or welding.

6. Tilting mirror arrangement according to at least one of the preceding claims, **characterized in that** the tilting mirror (1) with its cylindrical part (4), on the one hand, and the base (5) with its integral members having the faces (6a-6c, 7a-7d), on the other hand, are produced from the same material, the material being a glass, a ceramic or a glass ceramic material.

7. Tilting mirror arrangement according to at least one of the preceding claims, **characterized in that** a non-planar surface implementing a stop point is provided instead of the planar precision stop face (6a).

## Revendications

1. Arrangement de miroir pivotant pour, au choix, dévier ou laisser passer un faisceau de rayons dans un appareil optique, de préférence un microscope, composé d'un miroir pivotant (1, 1a) et d'un support (5), **caractérisé en ce que** le miroir pivotant (1, 1a) est disposé sur le support (5) qui présente un appui à 3 faces (6a-6c) formé par des éléments de surface de précision pour le maintien avec précision du miroir pivotant (1, 1a) en position active et présente sur un côté une zone de réflexion (2) réalisée sous la forme d'une surface réfléchissante et sa zone d'extrémité est réalisée sous la forme d'une partie de forme cylindrique (4) avec un axe de pivotement (14) et que d'un côté le côté du miroir pivotant (1, 1a) qui présente la zone de réflexion (2) et la partie de forme cylindrique (4) se trouvent sur un plan commun (E1) et de l'autre côté les éléments de surface de précision (6a-6c) du support (5) se trouvent également sur un plan commun (E2), les deux plans (E1, E2) étant coïncidents (E1 = E2) dans la position active du miroir pivotant (1).

2. Arrangement de miroir pivotant selon la revendication 1, **caractérisé en ce que** la partie de forme cylindrique (4) présente des deux côtés des parties en saillie (4a, 4b) le long de l'axe de pivotement (14) et du support (5) pour maintenir le miroir pivotant (1, 1a), des surfaces de précision (6b, 6c) pour recevoir la partie de forme cylindrique (4, 4a, 4b) ainsi qu'une surface de précision (6a) pour servir de butée au miroir pivotant (1, 1a) en position active.

3. Arrangement de miroir pivotant selon au moins l'une des revendications précédentes, **caractérisé en ce que** le support (5) présente des surfaces d'appui supplémentaires (7a, 7b ; 7c, 7d) pour les parties en saillie (4a, 4b) et que celles-ci se trouvent sur les surfaces d'appui de précision (6b, 6c) en étant essentiellement perpendiculaires à celles-ci.

4. Arrangement de miroir pivotant selon au moins l'une des revendications précédentes, **caractérisé en ce que** le miroir pivotant (1) avec sa partie de forme cylindrique (4 ; 4a, 4b, 4c, 4d) et le support (5), combiné avec ses incarnations en forme de colonne ou de « U » présentant les surfaces (6a-6c, 7a-7d) est réalisé d'une seule pièce.

5. Arrangement de miroir pivotant selon au moins l'une des revendications précédentes, **caractérisé en ce que** la partie de forme cylindrique (4) et le miroir pivotant (1) d'une part ainsi que les incarnations présentant les surfaces (6a-6c, 7a-7d) d'autre part sont reliés avec le support (5) par collage, cimentage ou soudage en étant orientés avec précision.

6. Arrangement de miroir pivotant selon au moins l'une des revendications précédentes, **caractérisé en ce que** le miroir pivotant (1) avec sa partie de forme cylindrique (4) d'une part et le support (5) avec ses incarnations présentant les surfaces (6a-6c, 7a-7d) d'autre part sont fabriqués dans un seul et même matériau, le matériau étant un verre, une céramique ou un vitrocéramique.

7. Arrangement de miroir pivotant selon au moins l'une des revendications précédentes, **caractérisé en ce qu'**une surface non plane faisant office de point de butée est prévue à la place de la surface de butée de précision plane (6a).
